Europäisches Patentamt

**European Patent Office**

**Office européen des brevets**

(11) Publication number: **0 426 462 A2**

# EUROPEAN PATENT APPLICATION

(21) Application number: **90311951.9**

(22) Date of filing: **01.11.90**

(51) Int. Cl.5: **H04N 1/32**

(30) Priority: **01.11.89 US 430675**

(43) Date of publication of application:
**08.05.91 Bulletin 91/19**

(84) Designated Contracting States:
**DE FR GB IT**

(71) Applicant: **McCauley, Edward Thomas, III**
**506 Pine Needle Drive**
**Exton, Pennsylvania 19341(US)**

(72) Inventor: **McCauley, Edward Thomas, III**
**506 Pine Needle Drive**
**Exton, Pennsylvania 19341(US)**

(74) Representative: **Newby, John Ross et al**
**J.Y. & G.W. Johnson Furnival House 14/18**
**High Holborn**
**London WC1V 6DE(GB)**

(54) **Virtual facsimile machine.**

(57) A buffer for a facsimile machine includes a computer control having memory means capable of receiving and storing facsimile messages and appropriate switching means to switch an incoming line to the memory means in the facsimile buffer when all associated facsimile machines are busy. It also provides means for causing the memory means to access the facsimile machines and transmit the message for printout when a facsimile machine is not busy.

EP 0 426 462 A2

FIG.2

## VIRTUAL FACSIMILE MACHINE

The present invention relates to a buffer for accommodating temporarily facsimile messages off of multiple telephone lines to await the availability of a facsimile machine. The present invention also relates to a system involving at least one facsimile machine, a virtual facsimile machine and multiple lines.

The popularity arid spread of facsimile machines in the business and the professional world, and even into the home, is a well known phenomenon.

The use of facsimile machines has also been rapidly on the increase. It is not unusual for people who rely heavily on facsimile machines to buy more and more of these machines to make sure that they are not keeping customers and business colleagues waiting in response to busy signals.

The present invention provides an alternative to buying more facsimile machines or minimizes the number of additional facsimile machines that are needed. The invention relates to a virtual facsimile machine into which the incoming lines are fed and which when the facsimile machine is actually being used can receive the facsimile message in its entirety and hold it until a facsimile machine is available, after which it can be printed out.

The virtual facsimile machine has the advantage of being much less costly than a facsimile machine, frequently less than one-half, or even as little as one-tenth of an additional facsimile machine. The virtual facsimile machine requires relatively smaller maintenance than a facsimile machine and even serves to receive messages when a facsimile machine is out of paper. Since it is small relative to a facsimile machine, it saves considerable space in crowded quarters. It is a stand alone unit requiring only a facsimile machine to print out incoming messages or to send messages. Alternatively, it could be incorporated into a facsimile machine in which case input and output lines to the buffer would appear to go into a "master facsimile machine" containing the virtual facsimile machine.

More specifically, the present invention relates to a buffer for facsimile messages comprising memory means capable of storing facsimile messages. In the simplest aspect of the concept it requires a line connector for at least one telephone line over which facsimile messages may be transmitted, a facsimile machine connector for a facsimile machine capable of receiving and printing a facsimile message and switch means capable of alternatively connecting the line connector to either the facsimile machine connector or the memory means.

In its more practical embodiments the virtual facsimile machine has at least one memory means capable of storing facsimile messages and possibly many such memory means. Each memory may be capable of storing many facsimile messages. A plurality of line connectors are provided for connecting respectively to separate telephone or PBX lines. A plurality of facsimile machine connectors are provided for connecting to facsimile machines capable of receiving and printing a facsimile message. Switch means are provided which are capable of connecting the respective line connectors to the facsimile connectors or to the memory means. Sensing means senses when a line requires a connection or is in use, when the respective facsimile machines are in use, and when the respective memory means are in use, so that only when all facilities are in use will a busy signal be generated to other connecting line terminals where access is being sought to the facsimile machines. Switch means controls are responsive to the sensing means to operate the switch means to connect a line connector having an incoming facsimile message to a facsimile machine connection when the facsimile machine connected to it is not in use and to connect another line connector having an incoming facsimile message to a memory means not in use when no facsimile machine is immediately available so that the memory means can record the facsimile message while the facsimile machine is operating.

For a better understanding of the present invention, reference is made to the accompanying drawings in which:

Fig. 1 is a block diagram representing the broad conceptual embodiment of the virtual facsimile machine of the present invention; and

Fig. 2 is an expanded block diagram showing components in more detail than the diagram of Fig. 1.

'Referring to the drawing, the virtual facsimile machine 10 is basically a message storage means such as dynamic memory. It also includes switch means which enable a signal coming in on any one of telephone lines 12, 14...16 or any in between to be connected to available facsimile machines, 18, 20...22. The switch means not only switches between the facsimile machines, but, when facsimile machines are not available, switches to buffer storage 10 a line which would otherwise be given a busy signal in order to receive the message in the facsimile buffer 10. Each memory preferably is capable of storing many facsimile messages. When facsimile machines are not in use, means may be provided to show that messages are waiting, for example, and the memory may be manually switched to a facsimile machine that is not busy. Alternatively, automatic means to sense when facsimile machines are in use enables a detection of when they are not in use and may cause automatic switching to connect the memory storage to the facsimile machine so that the stored messages can be printed out.

The system can be very simple ranging from one facsimile machine with a virtual facsimile machine to accept a message from a second line while the one machine is busy. In practice, it is desirable to have more lines than facsimile machines, but usage will determine the number of facsimile machines which are needed and the provision of the virtual facsimile machine will allow storage of many messages in such a system. The sensing means senses when a line is being run and senses which facsimile machines are free. In the first instance it will act on the switch control to move the switching to connect the incoming signal to a non-busy facsimile machine. When the facsimile machines are all in use, it will switch the next line to a buffer in the facsimile message storage. Also in such devices, it is desirable to have automatic sensing which enables stored messages then to be printed out when facsimile machines are free. Sensing means determines which machines are free and where messages are stored operates the controls to make a switch connection allowing the memory to be connected to the facsimile machine which is not busy.

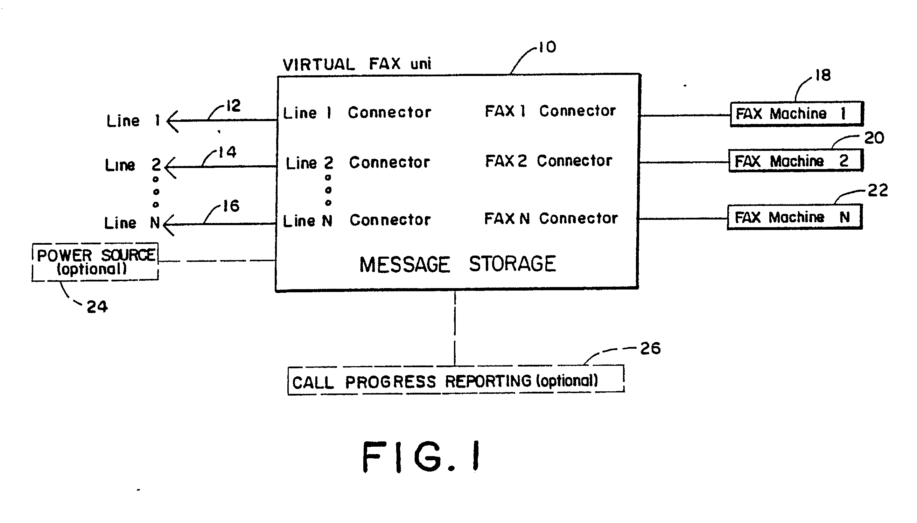

As shown in Fig. 1, a power source 24 making the virtual facsimile machine self-contained may be supplied. It is also desirable in some cases to have call progress reporting 26 in the form of a display that shows how various calls are moved so that calls in storage may be known to the operator.

Still another variation is to have the virtual facsimile machine incorporated as part of a facsimile machine, in which event, the various connections to the buffer then are made into that particular facsimile machine.

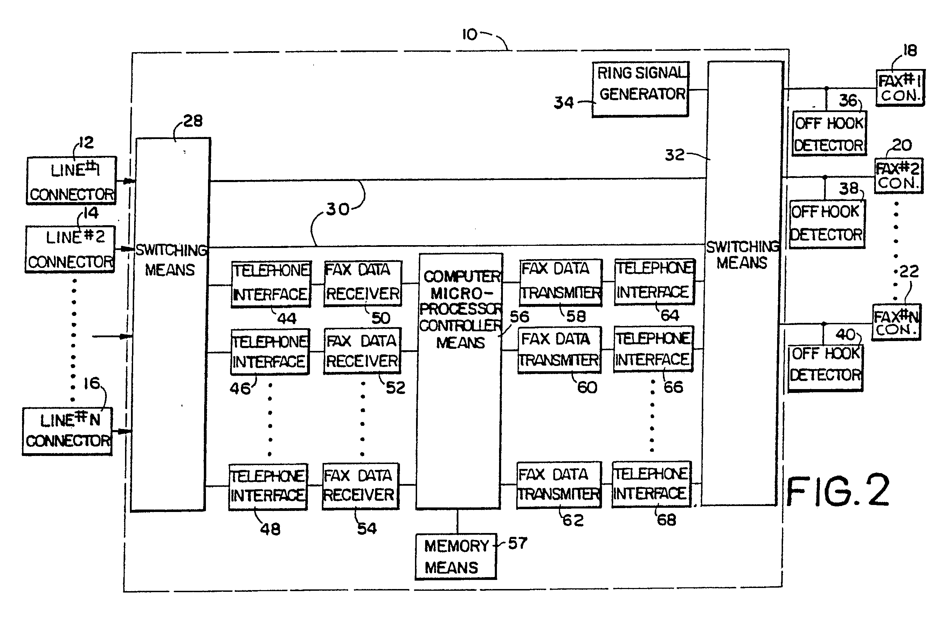

Many possibilities exist, such as manual switching in response to visual signals which generally is not cost effective in view of the state of the art. Arranging the system so that it works automatically sensing various conditions and then responding through a switch controller to do necessary switching. A system showing typical components which may be employed is represented in Fig. 2.

Here various components of the virtual facsimile machine 10 shown within the dotted lines are elaborated upon. The lines are connected through line connectors 12, 14 and 16, and possibly others, to facsimile machines 18, 20 or 22, depending upon what happens in message buffer 10. The use of N on the third depicted line connector and third facsimile connector is arbitrary in each case and does not imply the same number of input lines and facsimile machines. Normally there would be fewer facsimile machines, of course. However, it is contemplated that the most common system will employ only a single facsimile machine. The incoming lines must pass first through switch means 28 and may go through direct connections of the telephone interface to switching means 32 which provides a ring signal generator to connect the selected facsimile machine. off hook detectors 36, 38 and 40, connected with each of the facsimile machines or associated telephones may, of course, indicate inability of a particular facsimile machine to receive a message at the time it is interrogated (rung). If direct connect lines 30 are all busy, then the switching means 28 switches through one of the telephone interfaces 44, 46 and 48, which, in turn, connects one of the facsimile data receivers 50, 52 or 54. As with other components of equipment, these receivers may be multiplied numbers of times, which is indicated by designating the third receiver beyond the dashed line the Nth receiver, which may be a different number from the N representing either input lines or facsimile machines. Controlling each facsimile data receiver is a computer or micro-processor or controller means 56, which also provides memory storage means 57 for storing the message picked up by a particular facsimile data receiver and holding it until a facsimile machine is available. When a facsimile machine is available, messages may be brought up by the computer and transmitted by the facsimile data transmitters 58, 60 through 62 and the telephone interface 64, 66 and 68 to the switching means 32, which again selects a facsimile machine which is not busy at the time. Thus, the facsimile message buffer can be composed of state of the art commercially available components and provide a facsimile message buffer to handle many more messages than could be handled by the available facsimile machine or machines at a given point in time and later transmitted to the facsimile machines when they are not in use.

As will be apparent to those skilled in the art, the present invention represents a rather simple concept. Many variations on its theme are available. All such variations within the scope of the claims are intended to be within the scope and spirit of the present invention.

## Claims

1. A buffer system for facsimile messages for use in combination with a facsimile receiver to temporarily store received messages comprising, memory means capable of storing received facsimile messages, multiple line connectors for telephone lines over which facsimile messages may be received, a facsimile machine connector for a facsimile machine capable of receiving and printing a facsimile message, and switch means capable of alternatively connecting a selected line connector to either the facsimile machine connector or the memory means.

2. A buffer system for facsimile messages for use in combination with a facsimile receiver to temporarily store received messages comprising, memory means capable of storing received facsimile messages, multiple line connectors for connection of a plurality of telephone lines, a facsimile machine connector for connecting to a facsimile machine capable of receiving a facsimile message, switch means capable of connecting the respective line connectors to the facsimile connector or to the memory means, sensing means to sense when a line requires connection or is in use, when the facsimile machine use, and when the memory means is in use, and switch means controls responsive to the sensing means to operate the switch means to connect a line connector having an incoming facsimile message to the facsimile machine connector when not in use and to connect another line connector having a later incoming facsimile message to the memory means so that the memory means can store the later facsimile message while the facsimile machine is operating.

3. The buffer system according to claim 2, in which the switch means can also connect the facsimile means connector to the memory means, and play back means is provided in conjunction with the memory means to transfer the recorded facsimile message to the facsimile machine.

4. The buffer system according to claim 3, in which the switch means is manually controlled.

5. The buffer system according to claim 3, in which the switch means for connecting the memory means to the facsimile means machine connector is also subject to sensing so that when the sensing means senses that the facsimile machine is free and that a complete message has been stored on the memory means it may connect the memory means to the facsimile means and the play back means may be activated to print out the facsimile message.

6. A buffer system for facsimile messages for use in combination with a facsimile receiver to temporarily store received messages comprising, a plurality of memory means capable of storing received facsimile messages, a plurality of line connectors for connection respectively to separate telephone lines, a plurality of facsimile machine connectors for connecting to facsimile machines capable of receiving a facsimile message, switch means capable of connecting the respective line connectors to the facsimile connectors or to one of the memory means, sensing means to sense when a line requires a connection or is in use, when the respective facsimile machines are in use, and when the respective memory means are in use, and switch means controls responsive to the sensing means to operate the switch means to connect a line connector having an incoming facsimile message to a facsimile machine connector when the facsimile machine connected to it is not in use and to connect another line connector having an incoming facsimile message to a memory means not in use so that the memory means can store each received facsimile message while the facsimile machine is operating.

7. A buffer system for facsimile messages for use in combination with a facsimile receiver to temporarily store received messages comprising, a plurality of memory means capable of storing received facsimile messages, a plurality of line connectors for connection respectively to separate telephone lines, a facsimile machine connector for connecting to a facsimile machine capable of receiving a facsimile message, switch means capable of connecting the respective line connectors to the facsimile connector or to one of the memory means, sensing means to sense when a line requires a connection or is in use, when the facsimile machine is in use, and when the respective memory means are in use, and switch means controls responsive to the sensing means to operate the switch means to connect a line connector having an incoming facsimile message to the facsimile machine connector when the facsimile machine connected to it is not in use and to connect another line connector having an incoming facsimile message to a memory means not in use so that the memory means can store each received facsimile message while the facsimile machine is operating.

8. The method of receiving multiple facsimile messages simultaneously at a common facsimile message receiving station comprising, memory means and a facsimile receiver and switch means responsive to the condition of the facsimile receiver, comprising, upon initiation of a facsimile message determining whether the facsimile receiver is in use and if not connecting the facsimile message to the facsimile receiver and, if so, switching the message to a buffer memory, then sensing when the facsimile receiver is not in use and transferring the message from the memory to the facsimile receiver.

9. The method of handling multiple facsimile messages simultaneously at a receiving terminal, comprising, allowing a first message to be received by a facsimile receiver, thereafter switching subsequent concurrently received messages to other channels of buffer memory, and, when the facsimile receiver is not busy transferring any recorded facsimile messages from buffer memory into the facsimile receiver from the respective buffer memory channels in sequence until all facsimile messages have been processed through the facsimile receiver.

VIRTUAL FAX uni

Line 1 Connector    FAX 1 Connector

Line 2 Connector    FAX 2 Connector

Line N Connector    FAX N Connector

MESSAGE STORAGE

FAX Machine 1

FAX Machine 2

FAX Machine N

CALL PROGRESS REPORTING (optional)

POWER SOURCE (optional)

Line 1

Line 2

Line N

FIG. 1

FIG.2